Europäisches Patentamt

**European Patent Office**

**Office européen des brevets**

(11) Numéro de publication: **0 306 395 B1**

(19)

(12) FASCICULE DE BREVET EUROPEEN

(45) Date de publication de fascicule du brevet: **21.10.92** (51) Int. Cl.⁵: **H01L 31/02**, H01L 27/14

(21) Numéro de dépôt: **88402170.0**

(22) Date de dépôt: **26.08.88**

(54) **Circuit de détection de lumière.**

(30) Priorité: **31.08.87 FR 8712069**

(43) Date de publication de la demande:
**08.03.89 Bulletin 89/10**

(45) Mention de la délivrance du brevet:
**21.10.92 Bulletin 92/43**

(84) Etats contractants désignés:
**DE ES GB IT NL**

(56) Documents cités:
**FR-A- 2 130 399**
**FR-A- 2 346 697**
**FR-A- 2 370 268**
**GB-A- 2 074 788**

**Techniques de l'Ingénieur, Electronique, A.**
**Danzin, 1984, Paris, pages E 2430-5 à 2430-8**

(73) Titulaire: **SGS-THOMSON MICROELECTRO-**
**NICS S.A.**
**7, Avenue Galliéni**
**F-94250 Gentilly(FR)**

(72) Inventeur: **Fruhauf, Serge**
**Cabinet Ballot-Schmit 7, rue Le Sueur**
**F-75116 Paris(FR)**
Inventeur: **Sourgen, Laurent**
**Cabinet Ballot-Schmit 7, rue Le Sueur**
**F-75116 Paris(FR)**

(74) Mandataire: **Ballot, Paul Denis Jacques et al**
**Cabinet Ballot-Schmit, 7, rue le Sueur**
**F-75116 Paris(FR)**

EP 0 306 395 B1

## Description

La présente invention à pour objet un circuit de détection de lumière utilisable pour détecter l'apparition d'un éclairement. Ce circuit peut préférablement être utilisé dans le domaine des circuits intégrés électroniques, où, s'il est intégré sur un même substrat qu'un circuit intégré à protéger,il peut rendre compte d'un éclairement auquel serait sousmis ce circuit.

Certains circuits intégrés électroniques présentent des caractères confidentiels, soit parce que les informations qu'ils mémorisent doivent rester secrètes, soit parce que leur fonctionnement doit rester caché. Ce dernier cas se présente en général lorsqu'on cherche à éviter les contre-façons ou bien, en particulier dans le domaine des cartes à mémoire, pour éviter des reconstitutions d'algorithmes secrets. En effet, on s'est rendu compte qu'il était possible de connaître et de comprendre par déduction le fonctionnement d'un circuit intégré lorsque la couche de passivation qui recouvre ce circuit à l'issue de sa fabrication a été enlevée. Dans ce but on sélectionne, après dépassivation, des fonctions du circuit tout en observant avec un microscope électronique le passage du courant dans des connexions de ce circuit. Le passage du courant provoque des contraintes mécaniques localisées dans des parties semi-conductrices. Il est possible d'en déduire des informations fonctionnelles concernant le circuit intégré.

Dans le domaine des cartes à mémoire les circuits intégrés utilisés sont généralement du type non volatile et dont le point mémoire comporte un transistor à grille flottante. Certains sont programmables et effaçables par soumission de la pastille à un rayonnement ultra-violet. Ce rayonnement est spectralement situé à l'extérieur de la bande visible. A la fin de la fabrication de ces circuits les pastilles sont recouvertes d'une couche de passivation transparente qui permet, après une opération préalable de test de bon fonctionnement sur le circuit intégré, d'effacer des informations de tests enregistrées, et de rendre à nouveau la mémoire vierge pour une utilisation à l'initiative de l'acheteur. Dès que cette opération de test est terminée, les circuits intégrés ainsi passivés sont noyés dans des supports opaques de maintien. Dans le domaine des cartes à mémoire, en particulier de type bancaire, ce support opaque peut être constitué par le matériau plastique de la carte elle-même. Le problème à résoudre consiste à éviter qu'un fraudeur ne puisse se livrer à un désencartage de la pastille semiconductrice, après qu'elle a été programmée par l'utilisateur, pour l'examiner avec un microscope électronique et tenter d'en déduire le fonctionnement ou au moins d'en neutraliser des codes d'accès.

Certains circuits intégrés, en particulier ceux comportant des mémoires effaçable électriquement ou des mémoires destinées à n'être programmées qu'une seule fois, comportent des couches de passivation opaque. Pour ces circuits, à travers la mesure de l'éclairement c'est en définitive l'opération de dépassivation qu'on cherche à contrôler.

L'invention a pour objet de détecter, et de neutraliser le cas échéant, l'exposition de tels circuits à la lumière. Dans ce but, on s'est rendu compte que des jonctions, de diodes où de régions drains-canal de transistor, polarisées en inverse réagissaient différemment à la lumière. En effet la lumière augmente le courant de fuite des jonctions polarisées en inverse dans un facteur de l'ordre de 1000 environ. L'invention est alors basée sur ce principe en l'accentuant au maximum. De cette manière on réalise un détecteur sensible à la lumière directe ou ambiante.

L'invention a donc pour objet un circuit intégré électronique à protéger contre l'exposition à la lumière comme défini dans la revendication 1.

L'invention sera mieux comprise à lecture de la description qui suit et à l'examen des figures qui l'accompagnent. Celles-ci ne sont données qu'à titre indicatif et nullement limitatif de l'invention. Les figures montrent :
- figure 1 : un circuit de détection de lumière conforme à l'invention ;
- figure 2 : un diagramme tension-courant montrant l'évolution de la caractéristique d'une jonction sousmise à un éclairement ;
- figure 3 : une représentation schématique d'un exemple simple d'un détecteur selon l'invention intégré sur un substrat d'un circuit intégré électronique à protèger.

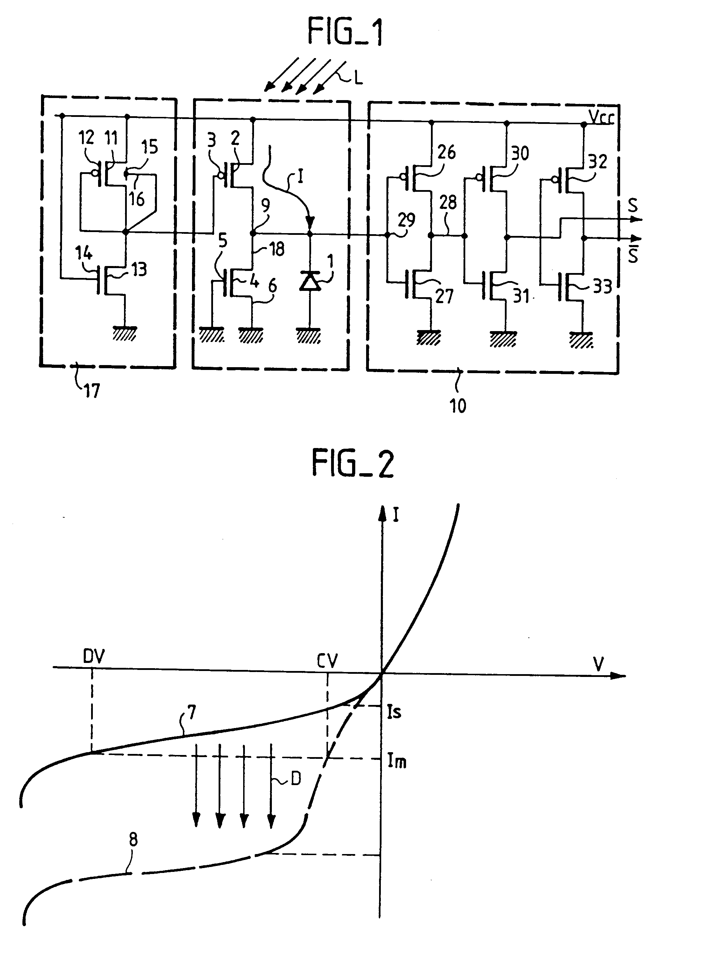

La figure 1 représente un circuit de détection de lumière conforme à l'invention. Ce circuit comporte essentiellement une jonction contenue dans une diode 1 polarisée en inverse par un générateur de courant 2. Dans un exemple préféré le générateur de courant est constitué par un transistor 2 maintenu à la limite de la conduction par une tension de commande appliquée sur sa grille 3 par un circuit de commande 17. De manière à assurer la polarisation correcte du transistor 2 celui-ci est monté en série entre une alimentation Vcc et un transistor 4 bloqué. Dans l'exemple représenté le transistor 2 est un transistor à canal P, le transistor 4 est un transistor à canal N. Le transistor 4 est bloqué par la connexion de sa grille 5 au même potentiel de masse que son drain 6. Le fonctionnement de ce détecteur est le suivant. Lorsque la jonction 1 n'est pas sousmise à un éclairement, sa courbe caractéristique tension courant V-I est la courbe 7 de la figure 2. Le troisième cadran de la courbe caractéristique de cette jonction est utilisé puisque la jonction est polarisée en inverse. Le transistor 2, mené à la limite de conduction, n'est susceptible que de délivrer un courant Im. Ce courant Im est cependant supérieur à un courant inverse de saturation Is dans la jonction 1.Dans ces conditions cette jonction est soumise à une différence de potentiel DV sensiblement égale à la tension d'alimentation Vcc moins la chute de tension drain-source dans le transistor 2.

Lorsque la jonction 1 est sousmise à un éclai-rement, flèches L, la courbe caractéristique 7 se déplace en 8, flèches D. Ceci signifie que le courant inverse de saturation devient beaucoup plus grand. Dans la pratique il devient même de l'ordre de 1000 fois plus grand bien que le dessin ne le montre pas. Dans ces conditions le transistor 2 qui n'est capable, du fait qu'il est à la limite de la conduction, de délivrer qu'un courant d'intensité limitée Im, impose une nouvelle chute de tension CV aux bornes de la jonction 1. Dans la pratique, d'un état d'éclairement à l'autre le courant Im n'est pas tout à fait constant. Cependant eu égard à la très grande variation du courant de saturation de la jonction cette approximation se justifie. Il en résulte que le potentiel en un point milieu 9 entre les transistors 2 et 4, et auquel est reliée la jonction 1, subit du fait de l'éclairement une chute égale à (DV -CV). Cette chute de potentiel est utilisée, dans un circuit 10 de remise en forme et d'exploitation, comme signal de détection d'éclairement.

Dans un exemple, le circuit 17 de polarisation du générateur de courant constitué par le transistor 2 comporte deux transistors en série et en état de conduction. Le premier transistor 11 est par exemple un transistor à canal P dont la source est reliée à l'alimentation Vcc, et dont le drain est relié à la grille 3 du transistor 2. La grille 12 du transistor à canal P 11 est également relié à la grille 3. Le deuxième transistor 13 est un transistor à canal N dont le drain est relié à la grille 3 et dont la source est reliée à la masse. La grille 14 du transistor 13 est reliée à l'alimentation Vcc. Compte tenu des polarités de ces transistors, ce mode de connexion les rend tous les deux conducteurs. Ils constituent un pont diviseur par leurs résistances de conduction mises en série.

Dans un exemple préféré de réalisation, un substrat semiconducteur utilisé pour réaliser un circuit intégré est un substrat semiconducteur de type P. Le transistor à canal P 11 doit alors y être réalisé dans un caisson 15 dopé N- . Pour éliminer un effet dit de substrat on relie le caisson 15 du transistor 11 par une prise de caisson 16 à la source de ce transistor 11. La tension disponible sur la grille 3 du transistor 2 dépend des tailles respectives des transistors 11 et 13. Dans la pratique le transistor 11 est beaucoup plus gros que le transistor 13 de sorte que sa résistance de conduction est bien plus faible que la résistance de conduction du transistor 13. De cette manière la tension sur la grille 3 est sensiblement égale à Vcc - Vds. La valeur Vds représente la chute de tension dans le transistor 2 lorsqu'il est conducteur. Le transistor 2 est toujours conducteur. Il se comporte cependant comme un générateur de courant sensiblement constant. Aussi, lorsque la jonction 1 est sousmise à un éclairement, il est incapable de fournir suffisamment de courant pour saturer en inverse cette jonction. Celle-ci ne provoque qu'une faible chute de potentiel CV.

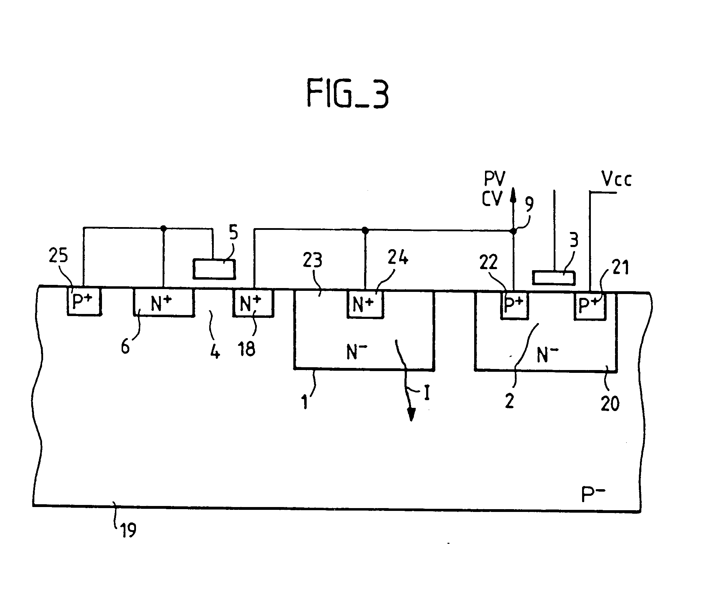

Lorsque la jonction 1 est sousmise à un éclairement le transistor 4 qui est un transistor à canal N présente une diode de type N + P- entre sa région de drain 18 et le substrat 19 du circuit intégré semiconducteur (figure 3). Cette diode 18 - 19 est également polarisée en inverse. Elle présente donc un même type de modification de sa caractéristique tension-courant inverse lorsqu'elle est soumise à l'éclairement. En pratique une seule de ces jonctions, la diode 1 où la jonction 18-19 du transistor 4, est utilisée. En effet, la jonction dont la caractéristique tension courant inverse se déplace le plus en fonction de l′ éclairement impose le déplacement correspondant de la tension disponible au point milieu du montage. Autrement dit une des deux jonctions est de ce point de vue inutile. Cette dualité de réalisation à néanmoins permis de montrer,et on peut le vérifier par le calcul, que parmis les jonctions qui présentent une plus grande sensibilité à la lumière, celles dont les concentrations d'impuretés de part et d'autre de la jonction sont les plus faibles sont en même temps les plus efficaces. Ainsi une jonction de type N + P- ou N-P + sera moins efficace qu'une jonction de type N-P-.

La figure 3 représente la coupe schématique du montage du détecteur de l'invention. Sur un substrat semiconducteur P-19 on a réalisé un caisson 20, avec une concentration N-d'impuretés, qui contient le transistor 2 du générateur de courant. La source 21 du transistor 2 est reliée à l'alimentation Vcc. La grille 3 du transistor 2 est relié au circuit de commande 17,et le drain 22 de ce transistor 2 est relié d'une part au drain 18 du transistor 4 et d'autre part à la cathode 23 de la diode 1. Cette diode 1 peut être réalisée en pratique de la même façon et en même temps que le caisson 20 . Elle comporte une concentration d'impuretés N-dans sa région cathode, son anode étant constituée par le substrat dopé P-lui-même. Pour améliorer la connexion une prise de caisson 24 dopée N + peut même être réalisée si une phase ultérieure de procédé le permet. De la même façon la connexion à la masse du substrat et de la source 6 du transistor 4 peut être obtenue en réalisant une prise de substrat 25. Selon que la jonction 1 ou la jonction 18-19 aura une efficacité prépondérante,l'autre jonction pourra être omise.

Le circuit de remise en forme 10, figure 1, comporte, dans un exemple préféré de réalisation, au moins deux inverseurs. De préférence il en possède même trois de manière à délivrer un signal d'une polarité donnée et un signal complémentaire lors de la détection d'un éclairement. Le premier inverseur, qui comporte un transistor à canal P 26 en série avec un transistor à canal N 27 entre l'alimentation et la masse, est de préférence désymétrisé pour délivrer facilement un niveau élevé à sa sortie 28 quand il reçoit un niveau faible à son entrée 29 : c'est à dire quand il y a éclairement (CV). Cette disymétrie a pour objet de réduire la consommation de courant dans l'inverseur en régime permanent. Cette disymétrie a également pour objet d'augmenter la sensibilité au basculement de l'inverseur lorsque l'éclairement est appliqué. En effet la tension CV disponible aux bornes de la jonction 1 n'est pas rigoureusement nulle. Aussi, pour éviter que cette tension non nulle ne provoque pas le basculement de l'inverseur 26-27, on désymétrise cet inverseur pour qu'il y soit plus sensible. Le second inverseur, construit sur un même principe, comporte deux transistors 30-31. Il est monté en cascade avec l'inverseur 26-27. Il est un inverseur classique : il sert en définitive d'amplificateur de signal. Cet inverseur délivre un signal S représentatif de l'éclairement.De préférence l'inverseur 30-31 est lui-même mis en cascade avec un troisième inverseur 32-33 pour délivrer un signal $\overline{S}$ complémentaire du signal S. Il est possible d'exploiter un de ces deux signaux pour neutraliser l'utilisation d'un circuit intégré semi-conducteur quand on veut le protèger contre des atteintes résultant d'un désencartage ou d'une dépassivation.

## Revendications

1. Circuit intégré électronique à protéger contre l'exposition à la lumière résultant d'une dépassivation, comportant un détecteur de lumière composé d'une jonction (1) qui reçoit la lumière (L) à détecter, la jonction étant polarisée en inverse par un générateur de courant constant, ce générateur de courant constant comportant un transistor (2) polarisé à la limite de la conduction, de manière à délivrer à la jonction un courant d'intensité limité (Im) légèrement supérieur au courant inverse de saturation de la jonction, quand elle ne reçoit pas la lumière pour faire varier la tension aux bornes de la jonction en fonction de l'intensité de la lumière reçue et délivrer un signal de neutralisation du circuit intégré.

2. Circuit intégré selon la revendication 1 , caractérisé en ce que la jonction est contenue dans une diode (1).

3. Circuit intégré selon la revendication 1, caractérisé en ce que la jonction est contenue dans un transistor (4).

4. Circuit intégré selon l'une quelconque des revendications 1 à 3, caractérisé en ce que la jonction est de type N-P-.

5. Circuit intégré selon la revendication 4, caractérisé en ce que la jonction N-P- est constituée par un caisson (20) N- dans un substrat semiconducteur P-.

6. Circuit intégré selon l'une quelconque des revendications 1 à 5, caractérisé en ce qu'il comporte un circuit de remise en forme (10) comportant au moins deux inverseurs bistables en série, un premier inverseur bistable dissymétrique (26-29) pour détecter par basculement une exposition du circuit de détection à la lumière et un deuxième inverseur (30-31) pour amplifier le signal de basculement délivré par le premier inverseur.

## Claims

1. An integrated electronic circuit for protecting against exposure to light resulting from a depassivation, comprising a light sensor consisting of a junction (1) which receives the light (L) to be detected, the junction being reverse polarised by a generator of constant current comprising a transistor (2) polarised to the conduction limit so as to supply to the junction a current of limited intensity (Im), slightly greater than the reverse saturation current of the junction when it does not receive light, in order to change the voltage at the terminals of the junction in dependence on the intensity of the light received and to supply a signal for neutralizing the integrated circuit.

2. An integrated circuit as claimed in claim 1, characterized in that the junction comprises a diode (1).

3. An integrated circuit as claimed in claim 1, characterized in that the junction is contained in a transistor (4).

4. An integrated circuit as claimed in any one of claims 1 to 3, characterized in that the junction is of the N-P- type.

5. An integrated circuit as claimed in claim 4, characterized in that the N-P- junction consists of an N- type well (20) in a P- semiconductor substrate.

6. An integrated circuit as claimed in any one of claims 1 to 5, characterized in that it comprises a signal shaping circuit (10) comprising at least two bistable inverters in series, a first asymmetric bistable inverter (26-29) for detecting, by switching, an exposure of the sensing circuit to light and a second inverter (30-31) for amplifying the switching signal supplied by the first inverter.

**Patentansprüche**

1. Integrierter elektronischer Schaltkreis zum Schutz gegen Belichtung, die zu einer Entpassivierung führt, umfassend einen aus einem Zonenübergang (1) bestehenden Lichtdetektor, der das festzustellende Licht (L) empfängt, wobei der Übergang durch einen Konstantstromgenerator umgekehrt polarisiert ist, wobei der Konstantstromgenerator einen Transistor (2) umfaßt, der auf den Leitungsgrenzwert polarisiert ist derart, daß an den Übergang ein Strom mit begrenzter Stärke (Im) etwas höher als der Sättigungsrückwärtsstrom des Übergangs geliefert wird, wenn er kein Licht empfängt, um die Spannung an den Anschlüssen des Übergangs abhängig von der Intensität des empfangenen Lichts zu verändern und ein Neutralisationssignal des integrierten Schaltkreises zu liefern.

2. Integrierter Schaltkreis nach Anspruch 1, dadurch **gekennzeichnet,** daß der Übergang in einer Diode (1) enthalten ist.

3. Integrierter Schaltkreis nach Anspruch 1, dadurch **gekennzeichnet,** daß der Übergang in einem Transistor (4) enthalten ist.

4. Integrierter Schaltkreis nach einem beliebigen der Ansprüche 1 bis (3), dadurch **gekennzeichnet,** daß der Übergang vom N-P-Typ ist.

5. Integrierter Schaltkreis nach Anspruch 4, dadurch **gekennzeichnet,** daß der N-P-Übergang durch ein N-Feld (20) in einem P-Halbleitersubstrat gebildet ist.

6. Integrierter Schaltkreis nach einem beliebigen der Ansprüche 1 bis 5, dadurch **gekennzeichnet,** daß er einen Formrückstellkreis (10) umfaßt, umfassend wenigstens zwei bistabile Inverter in Reihe, einen ersten asymmetrischen bistabilen Inverter (26-29), um durch Kippen eine Belichtung des Detektionskreises zu erfassen, und einen zweiten Inverter (30-31), um das durch den ersten Inverter gelieferte Kippsignal zu verstärken.

EP 0 306 395 B1

# FIG_1

# FIG_2

# FIG_3